Europäisches Patentamt

European Patent Office

Office européen des brevets

(19)

(11) Veröffentlichungsnummer: **0 077 968**
**A1**

(12) # EUROPÄISCHE PATENTANMELDUNG

(21) Anmeldenummer: 82109394.5

(22) Anmeldetag: 11.10.82

(51) Int. Cl.³: **H 02 P 6/02**

(30) Priorität: 23.10.81 DE 3142142

(43) Veröffentlichungstag der Anmeldung:
04.05.83 Patentblatt 83/18

(84) Benannte Vertragsstaaten:
AT DE FR GB IT

(71) Anmelder: SIEMENS AKTIENGESELLSCHAFT
Berlin und München Wittelsbacherplatz 2
D-8000 München 2(DE)

(72) Erfinder: Leitgeb, Wilhelm, Dr.
Martin-Luther-Strasse 26
D-8740 Bad Neustadt/Saale(DE)

(54) Kommutierungseinrichtung für einen aus einer Gleichspannungsquelle gespeisten Elektromotor.

(57) Die Erfindung betrifft eine Kommutierungseinrichtung für einen aus einer Gleichspannungsquelle gespeisten Elektromotor. Die Kommutierungseinrichtung besteht aus in Brückenschaltung angeordneten Halbleiterschaltelementen (7 bis 12), die mittels einer Steuerspannung in Abhängigkeit von der Rotorstellung des Motors angesteuert sind. Um die Halbleiterschaltelemente (7 bis 12) ohne Übertrager und ohne gesonderte Steuerspannungsquellen ansteuern zu können, wird vorgeschlagen, daß die an der Laststrecke der Halbleiterschaltelemente (7 bis 12) abfallende Restspannung und/oder die in der jeweils vorausgehenden Sperrphase gespeicherte Sperrspannung als Steuerspannung dient.

FIG 1

EP 0 077 968 A1

0077968

SIEMENS AKTIENGESELLSCHAFT

Berlin und München

Unser Zeichen

VPA 81 P 3 1 7 3 E

Kommutierungseinrichtung für einen aus einer Gleichspannungsquelle gespeisten Elektromotor

Die Erfindung betrifft eine Kommutierungseinrichtung gemäß
dem Oberbegriff des Patentanspruchs 1.

Eine solche Kommutierungseinrichtung ist durch die
DE-OS 25 08 546 bekannt. Infolge der Brückenschaltung der
Transistoren dieser Kommutierungseinrichtung liegen deren
Basen auf unterschiedlichen Potentialen. Daher ist es notwendig die Steuerspannung unter Zwischenschaltung von Übertragern an die Basen der Transistoren zu legen oder mehrere
gegeneinander potentialfreie Steuerspannungsquellen vorzusehen.

Der Erfindung liegt die Aufgabe zugrunde, eine Kommutierungseinrichtung der eingangs beschriebenen Art so auszubilden, daß die Steuerung der Halbleiterschaltelemente ohne
Übertrager und ohne gesonderte Steuerspannungsquellen erfolgen kann.

Die Lösung der gestellten Aufgabe gelingt durch die im
Kennzeichen des Patentanspruchs 1 angegebenen Merkmale.

Anhand eines in der Zeichnung dargestellten Ausführungsbeispiels wird der Anmeldungsgegenstand nachfolgend näher
beschrieben. Es zeigt

Fig. 1 eine vollständige Kommutierungseinrichtung und
Fig. 2 ein Schaltungsbeispiel für ein Steuergerät.

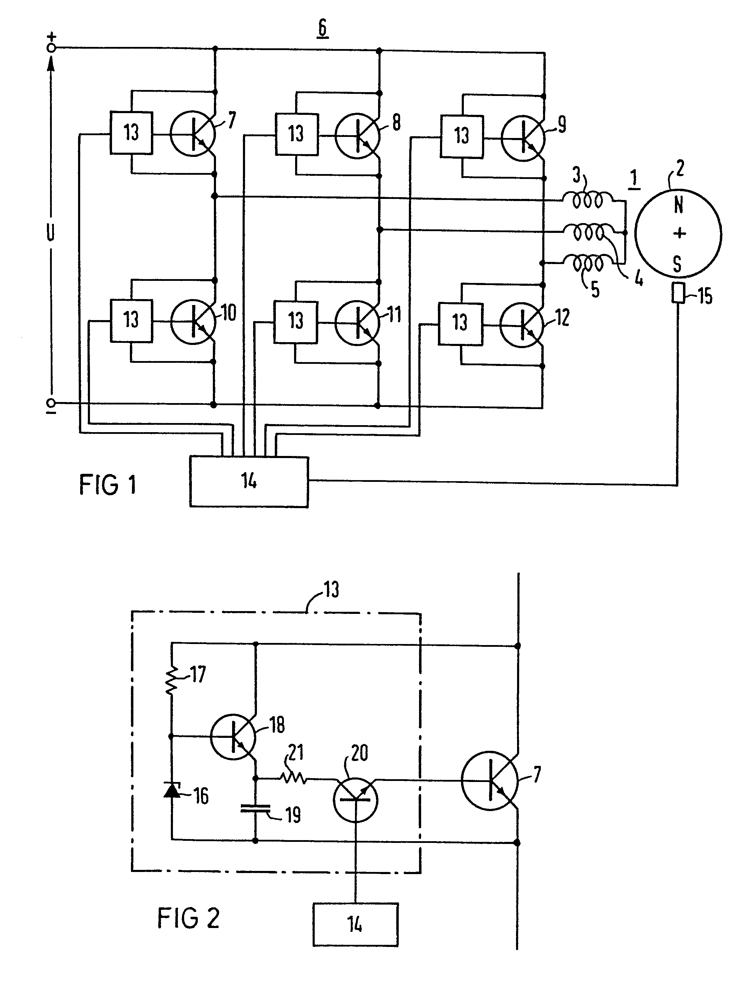

In Fig. 1 ist mit 1 ein Motor bezeichnet, der einen permanentmagneterregten Läufer 2 und drei Ständerwicklungsstränge

M1 2 Cz / 16.10.1981

3 bis 5 aufweist. Die drei Ständerwicklungsstränge 3 bis 5 sind an eine Kommutierungseinrichtung 6 angeschlossen. Diese Kommutierungseinrichtung 6 besteht aus in Brückenschaltung angeordneten Haupttransistoren 7 bis 12. Die Haupttransistoren 7 bis 9 bilden die eine Brückenhälfte und die Haupttransistoren 10 bis 12 die andere Brückenhälfte. Die Kommutierungseinrichtung 6 ist an eine Gleichspannungsquelle U angeschlossen.

Jedem der Haupttransistoren 7 bis 12 ist ein Steuergerät 15 zugeordnet, das mit seinem Versorgungsein- und -ausgang zu der Kollektor-Emitterstrecke des jeweiligen Transistors und mit seinem Steuerausgang an die Basis des zugeordneten Transistors angeschlossen ist. Mit seinem Steuereingang ist jedes Steuergerät 13 an eine Steuerschaltung 14 angeschlossen, die in Abhängigkeit von einem Rotorstellungsgeber 15 arbeitet. Die Steuergeräte 13 erhalten somit die entsprechenden Ansteuersignale in einer von der Rotorstellung abhängigen Folge.

Die Steuergeräte 13 entnehmen die zum Ansteuern der Haupttransistoren 7 bis 12 notwendige Steuerspannung dem Laststromkreis der Haupttransistoren 7 bis 12. Die an dem Steuergerät anliegende und damit für die Steuerung der Haupttransistoren 7 bis 12 zur Verfügung stehende Spannung schwankt annähernd zwischen der angelegten Gleichspannung U und der Kollektor-Emitter-Restspannung der Haupttransistoren. Da die Kollektor-Emitter-Restspannung mit abnehmendem Basisstrom zunimmt, steigt diese so lange an, bis sich ein natürliches Gleichgewicht einstellt. Hierdurch kann sich ein relativ hoher Spannungsabfall an der Kollektor-Emitterstrecke ergeben, der zu entsprechend hohen Verlusten führt. Aus diesem Grunde ist es vorteilhaft, die während einer vorausgehenden Sperrphase anstehende Sperrspannung über einen Längsregler zu reduzieren und in einem Kondensator zu speichern.

In Fig. 2 ist ein solcher Längsregler dargestellt. Zu der Kollektor-Emitter-Strecke des jeweiligen Haupttransistors, z.B. 7, sind eine aus einem ohmschen Widerstand 17 und einer Zenerdiode 16 bestehende Reihenschaltung sowie eine aus einem Hilfstransistor 18 und einem Kondensator 19 gebildete Reihenschaltung parallelgeschaltet. Mit seiner Basis ist der Hilfstransistor 18 an den gemeinsamen Verbindungspunkt des ohmschen Widerstandes 17 und der Zenerdiode 16 angeschlossen. Der gemeinsame Verbindungspunkt des Emitters des Hilfstransistors 18 mit dem Kondensator 19 ist über einen Steuerwiderstand 21 und ein elektronisches Schaltelement 20 mit der Basis des betreffenden Haupttransistors verbunden.

Der Längsregler arbeitet wie folgt: Während der Sperrphase des jeweiligen Haupttransistors wird der Hilfstransistor 18 durch die an der Zenerdiode 16 abfallende Zenerspannung durchgesteuert und damit der Kondensator 19 aufgeladen. Die Aufladung des Kondensators 19 erfolgt solange, bis seine Spannung die Höhe der Zenerspannung erreicht und der Hilfstransistor 18 dadurch gesperrt wird. Die Kondensatorspannung wird damit auf die Höhe der Zenerspannung begrenzt. Das elektronische Schaltelement 20 wird durch die Steuerschaltung 14 gesteuert, die ihrerseits in Abhängigkeit von dem Rotorlagegeber 15 angesteuert wird. Ist das elektronische Schaltelement 20 durchgesteuert, wird der angeschlossene Haupttransistor durch die Kondensatorspannung aufgesteuert und im leitenden Zustand gehalten, bis das elektronische Schaltelement 20 wieder gesperrt wird.

Die zum Durchsteuern der Haupttransistoren notwendige Energie wird somit bei dem in Fig. 2 dargestellten Steuergerät 13 dem Kondensator 19 entnommen. Hierbei ist es besonders vorteilhaft, als Haupttransistoren 7 bis 12 steuerleistungsarme Transistoren (Mosfet-Transistoren) zu verwenden. Bei Verwendung solcher steuerleistungsarmer Haupttransistoren ergeben sich entsprechend niedere Kapazitätswerte für die
in den Steuergeräten 13 eingebauten Kondensatoren 19.


2 Figuren
3 Patentansprüche

Patentansprüche

1. Kommutierungseinrichtung für einen aus einer Gleichspannungsquelle gespeisten Elektromotor, die aus in Brückenschaltung angeordneten Halbleiterschaltelementen besteht, die mittels einer Steuerspannung in Abhängigkeit von der Rotorstellung angesteuert sind, d a d u r c h   g e -k e n n z e i c h n e t , daß die an der Laststrecke der Halbleiterschaltelemente (7 bis 12) abfallende Restspannung und/oder die in der jeweils vorausgehenden Sperrphase gespeicherte Sperrspannung als Steuerspannung dient.

2. Kommutierungseinrichtung nach Anspruch 1, d a d u r c h   g e k e n n z e i c h n e t , daß die während der Sperrphase anstehende Sperrspannung mittels eines Längsreglers begrenzt und in einem Kondensator (19) gespeichert ist.

3. Kommutierungseinrichtung nach Anspruch 1 und 2, d a -d u r c h   g e k e n n z e i c h n e t , daß als Halb-leiterschaltelemente (7 bis 12) steuerleistungsarme Transi-storen vorgesehen sind.

FIG 1

FIG 2

## Europäisches Patentamt

## EUROPÄISCHER RECHERCHENBERICHT

### EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. ³) |
|---|---|---|---|
| | --- | | H 02 P 6/02 |
| A | DE-A-3 006 707 (MATSUSHITA ELECTRIC INDUSTRIAL) * Seite 6, Zeile 23 - Seite 7, Zeile 3; Seite 15, Zeilen 16-26; Figuren 4,7 * | 1 | |
| | --- | | |
| A | US-A-4 027 212 (NASA) * Spalte 2, Zeile 48 - Spalte 4, Zeile 38; Figur 1 * | 1 | |
| | --- | | |
| A | CH-A- 465 053 (GOLAY BUCHEL) * Spalte 2, Zeilen 1-13; Zeile 30 - Spalte 3, Zeile 16; Figur 1 * | 1 | |
| | ----- | | |

| RECHERCHIERTE SACHGEBIETE (Int. Cl. ³) |
|---|
| H 02 P 6/00 H 02 K 29/00 |

Der vorliegende Recherchenbericht wurde für alle Patentansprüche erstellt.

| Recherchenort DEN HAAG | Abschlußdatum der Recherche 31-01-1983 | Prüfer WEIHS J.A. |
|---|---|---|